(19) **Europäisches Patentamt European Patent Office Office européen des brevets**

(11) **EP 2 435 235 B1**

(12) **FASCICULE DE BREVET EUROPEEN**

(45) Date de publication et mention
de la délivrance du brevet:
**17.04.2013 Bulletin 2013/16**

(21) Numéro de dépôt: **10723650.7**

(22) Date de dépôt: **21.05.2010**

(51) Int Cl.:
**B29C 49/56** *(2006.01)*        **B29C 33/26** *(2006.01)*

(86) Numéro de dépôt international:
**PCT/FR2010/000386**

(87) Numéro de publication internationale:
**WO 2010/136667 (02.12.2010 Gazette 2010/48)**

(54) **MECANISME DE COMMANDE D'OUVERTURE ET FERMETURE D'UN MOULE PORTEFEUILLE ET LA MACHINE COMPRENANT LE MECANISME**

MECHANISMUS ZUR STEUERUNG DES ÖFFNENS UND VERSCHLIESSENS EINER FORM VOM ZUSAMMENKLAPPBAREN TYP SOWIE MASCHINE MIT DIESEM MECHANISMUS

MECHANISM FOR CONTROLLING THE OPENING AND CLOSING OF A PIVOTING TYPE OF MOULD, AND MACHINE INCLUDING THE MECHANISM

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **29.05.2009 FR 0902610**

(43) Date de publication de la demande:
**04.04.2012 Bulletin 2012/14**

(73) Titulaire: **Sidel Participations
76930 Octeville sur Mer (FR)**

(72) Inventeurs:
• **GROSSIN, Emilie
F-76930 Octeville sur Mer (FR)**
• **BRACHET, Vincent
76930 Octeville sur Mer (FR)**

(74) Mandataire: **Demulsant, Xavier
Dejade & Biset
35, rue de Châteaudun
75009 Paris (FR)**

(56) Documents cités:
**EP-A1- 0 565 917     DE-U1- 29 913 182
FR-A1- 2 843 714     FR-A1- 2 881 678**

**Description**

L'invention a trait aux techniques de fabrication des récipients par soufflage ou étirage soufflage à partir d'ébauches en matière plastique. Ces ébauches peuvent être des préformes ou des récipients intermédiaires ayant subi un premier soufflage et destinés à en subir au moins un second.

Suivant une technique bien connue, on introduit les ébauches, préalablement chauffées à une température supérieure à la température de transition vitreuse de la matière (environ 80°C pour le polyéthylène téréphtalate ou PET), dans des moules portefeuille montés en étoile à la périphérie d'un carrousel et comprenant chacun deux demi-moules articulés autour d'un axe commun. Chaque moule est fixé sur une potence montée en rotation par rapport à un bâti fixe du carrousel, autour d'un axe central de celui-ci. L'axe d'articulation du moule est fixe par rapport à la potence.

Un mécanisme commande l'ouverture et la fermeture de chaque moule. Le brevet français FR 2 843 714 (SIDEL) et son équivalent américain US 7 249 944, fournissent un exemple de réalisation d'un tel mécanisme. Ce mécanisme comprend deux biellettes de même longueur couplées chacune en rotation à l'avant (côté moule) à un demi-moule respectif, et réunies à l'arrière (côté carrousel) en étant mutuellement articulées autour d'un axe commun. Un système d'actionnement commande le déplacement radial de l'axe commun des biellettes. Ce système comprend un levier (appelé bielle dans le brevet) portant, à une extrémité, un galet circulant dans une came, et une manivelle (appelée bras de commande) solidaire de la bielle par une première extrémité, et couplée par une extrémité opposée à l'axe commun d'articulation des biellettes.

Le mouvement radial du galet, suivant la position angulaire du moule par rapport au bâti du carrousel, provoque le pivotement solidaire du levier et de la manivelle autour de leur axe de rotation, et le déplacement, suivant un arc de cercle, de l'axe commun des biellettes, qui provoque l'ouverture (ou la fermeture) du compas et, par voie de conséquence, la fermeture respective (ou l'ouverture) du moule.

Ce mécanisme équipe aujourd'hui de nombreuses machines de soufflage, dont les cadences de production atteignent plusieurs dizaines de milliers de récipients par heure. Le temps de cycle de soufflage, entre l'instant où l'ébauche est introduite dans le moule, et l'instant où le récipient soufflé est évacué du moule, est généralement inférieur à 2,5 secondes. Pour chaque moule dont est pourvue la souffleuse, le nombre de cycles (comprenant une ouverture et une fermeture du moule) effectués chaque heure est supérieur à 1 500. Ainsi, pour une souffleuse fonctionnant par hypothèse sur deux tranches de huit heures par jour (on suppose que la souffleuse est en arrêt au cours de la troisième tranche, pour diverses opérations de maintenance ou de réglage), sept jours par semaine tout au long de l'année, chaque moule équipant cette souffleuse effectue chaque année un nombre de cycle supérieur à huit millions.

On comprend donc que le mécanisme d'ouverture et fermeture du moule soit un composant critique, sur le bon fonctionnement duquel repose en grande partie la fiabilité et la durabilité de la souffleuse. C'est pourquoi les pièces de ce mécanisme doivent être correctement dimensionnées afin d'améliorer leur tenue à la fatigue, et bien lubrifiées pour améliorer leur résistance à l'usure.

On constate toutefois que les pièces du mécanisme d'ouverture et de fermeture ont une durée de vie trop limitée au regard des exigences de productivité et de durabilité auxquelles est soumise une souffleuse, et que de trop nombreuses interventions nécessitant l'arrêt de la machine ont pour origine la défaillance de ce mécanisme.

Diverses astuces de conception ont été proposées pour rattraper les jeux ou réduire les à-coups, l'objectif final étant de permettre une augmentation des cadences de production.

Le brevet français FR 2 843 714 précité, par exemple, propose de munir le mécanisme d'ouverture et de fermeture d'un ressort de compensation qui permet de réduire l'amplitude des variations du couple lors des phases d'ouverture et de fermeture, et donc de réduire les à-coups.

Si ces mesures ont indubitablement constitué un progrès, il est toutefois apparu souhaitable aux inventeurs d'améliorer encore la conception du mécanisme d'ouverture et de fermeture. S'agissant en particulier du mécanisme proposé par le brevet français FR 2 843 714, l'ajout d'un ressort a certes permis de réduire les à-coups, mais a concomitamment augmenté la masse des éléments tournants de la machine, et par conséquent leur inertie, ce qui a paradoxalement introduit un facteur limitatif des cadences de production.

Les inventeurs ont entrepris de repenser la cinématique du mécanisme pour répondre notamment aux contraintes suivantes : légèreté ; simplicité ; vitesse ; souplesse ; tenue à la fatigue ; résistance à l'usure ; fiabilité.

À cet effet, l'invention propose, selon un premier objet, un mécanisme de commande d'ouverture et de fermeture d'un moule portefeuille comprenant deux demi-moules montés articulés l'un par rapport à l'autre autour d'une charnière commune entre une position fermée où les demi-moules sont appliqués l'un contre l'autre et une position ouverte dans laquelle les demi-moules sont écartés angulairement l'un de l'autre, ce mécanisme comprenant :

- une paire de biellettes de même longueur articulées l'une par rapport à l'autre à une extrémité arrière autour d'un axe commun et couplées chacune en rotation, à une extrémité avant, à un demi-moule respectif, autour d'un axe d'ancrage respectif,
- un système d'actionnement comprenant une manivelle articulée autour d'un axe de rotation fixe par rapport à la charnière du moule et couplée aux biellettes à leur extrémité arrière ;

- un système de transmission interposé entre le système d'actionnement et les biellettes, ce système de transmission incluant une bielle dont une extrémité arrière est couplée en rotation à la manivelle, et dont une extrémité avant opposée est couplée en rotation aux biellettes ;

dans ce mécanisme, en outre, l'axe de rotation commun des biellettes est guidé linéairement suivant un axe principal joignant, dans un plan perpendiculaire à l'axe d'articulation du moule, l'axe du moule et l'axe commun de rotation des biellettes.

Ce mécanisme permet non seulement une ouverture symétrique du moule, au bénéfice de l'équilibre des masses de la machine, mais également une réduction du couple moteur nécessaire à l'ouverture du moule, ce qui permet d'alléger les composants et, réduisant leur inertie, d'augmenter la vitesse d'actionnement et donc les cadences.

Suivant un mode préféré de réalisation, le système de transmission comprend une entretoise dont une extrémité arrière est couplée en rotation à la bielle, et une extrémité avant opposée couplée en rotation aux biellettes.

Le guidage linéaire de l'axe de rotation commun des biellettes peut être réalisé au moyen d'un pion monté coulissant dans une glissière fixe par rapport à l'axe d'articulation du moule.

Ce pion de guidage est par exemple formé à une extrémité d'un axe de rotation de la bielle par rapport à l'entretoise.

La longueur de la manivelle est de préférence inférieure ou égale à 60% (et par exemple égale à la moitié) de la distance entre l'axe de rotation de la manivelle et l'extrémité avant de la bielle en position fermée du moule.

Par ailleurs, en position fermée du moule, l'angle entre la manivelle et l'axe principal est de préférence supérieur ou égal à 40° (et par exemple égal à 45° environ).

En outre, en position fermée du moule, l'angle entre les biellettes est de préférence supérieur ou égal à 120°.

Selon un deuxième objet, l'invention propose une machine de fabrication de récipients par moulage, qui comprend un carrousel sur lequel sont montés une pluralité de moules portefeuille et, pour chaque moule, un mécanisme de commande d'ouverture et de fermeture tel que présenté ci-dessus.

D'autres objets et avantages de l'invention apparaîtront à la lumière de la description faite ci-après en référence aux dessins annexés dans lesquels :

- la figure 1 est une vue en plan de dessus illustrant un mécanisme de commande d'ouverture et de fermeture d'un moule, représenté en position fermée ;
- la figure 2 est une vue en perspective, depuis l'arrière, et à échelle agrandie, du mécanisme de la figure 1 ;
- la figure 3 est une vue de détail en plan, à échelle agrandie, du mécanisme des figures 1 et 2 ;
- la figure 4 est une vue similaire à la figure 1, montrant le mécanisme et le moule en position ouverte ;
- la figure 5 est une vue en perspective montrant le mécanisme et le moule de la figure 3 ;
- la figure 6 est un schéma simplifié illustrant la cinématique du système d'ouverture et fermeture lors de l'ouverture du moule ;
- la figure 7 est un schéma similaire à celui de la figure 6, illustrant à titre d'exemple comparatif la cinématique d'un système d'actionnement connu.

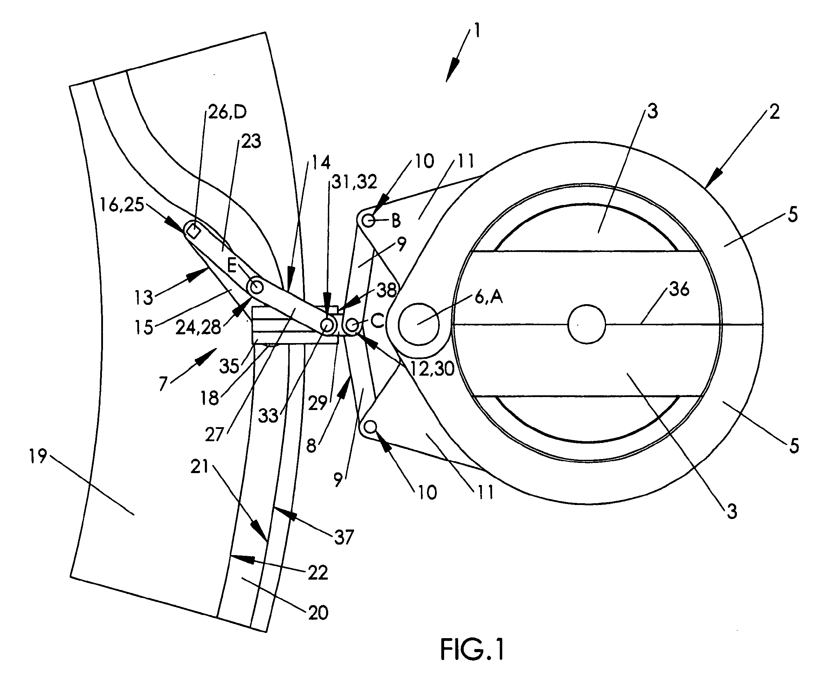

Sur la figure 1 est partiellement représentée une machine 1 de soufflage (ou d'étirage soufflage) de récipients à partir d'ébauches en matière plastique tel que PET.

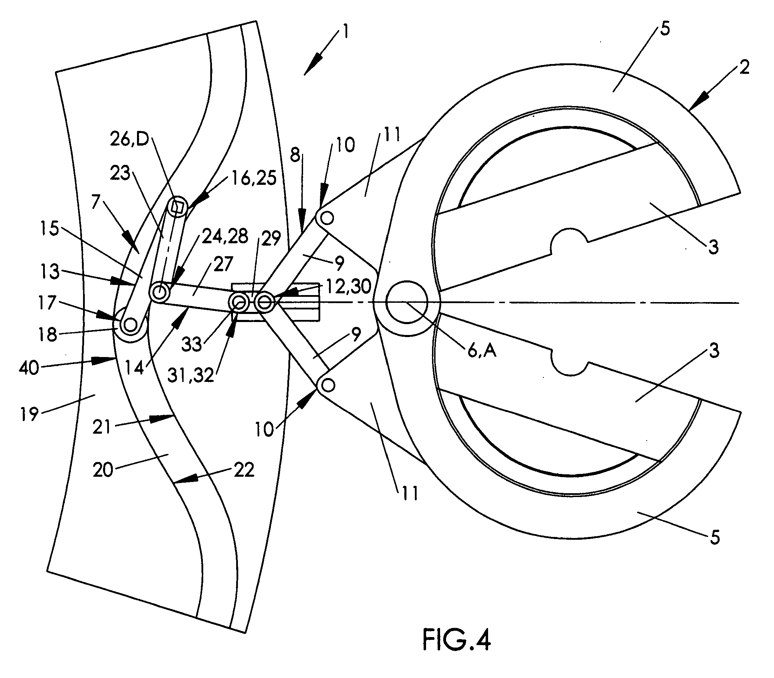

Cette machine 1 se présente sous la forme d'un carrousel comprenant un bâti sur lequel une pluralité de potences (ou consoles) sont montées en étoile, en rotation par rapport au bâti autour d'un axe central. Ces éléments de structure de la machine **1,** qui ne font pas partie intégrante de l'invention, n'ont pas été représentés pour des raisons de clarté et de simplicité de l'exposé. Un aperçu partiel de la structure de la machine est donné à la figure 4 du brevet français FR 2 843 714.

Dans ce qui suit, le terme « avant » désigne une direction radiale qui va s'éloignant de l'axe de la machine **1,** le terme « arrière » désignant une direction radiale qui va se rapprochant de l'axe de la machine **1.** De même, les termes « externe » et « extérieur » désignent une localisation éloignée de l'axe de la machine **1,** tandis que les termes « interne » et « intérieur » désignent, a contrario, une localisation comparativement plus proche de l'axe.

Un moule **2** est fixé sur chaque potence. Le moule **2** est du type portefeuille : il comprend deux demi-moules **3** dans chacun desquels est formée en creux, à partir d'une face plane, une demi-empreinte **4** du corps du récipient final. Les demi-moules **3** sont fixés de manière amovible dans deux porte-moules ou coquilles **5** respectives, montées articulées en rotation l'une par rapport à l'autre autour d'une charnière **6** commune formant un axe **A** d'articulation fixe par rapport à la console.

Un mécanisme **7** commande l'ouverture et la fermeture du moule **2.** Ce mécanisme **7** inclut, en premier lieu, un système **8** à compas comprenant deux biellettes **9** de longueur identique, couplées chacune en rotation, à une extrémité avant **10,** à un demi-moule **3** respectif, autour d'un axe **B** d'ancrage respectif formé dans une oreille 11 en saillie sur la coquille **5** correspondante et articulées l'une par rapport à l'autre à une extrémité arrière **12** autour d'un axe C commun.

Le mécanisme **7** comprend, en deuxième lieu, un système **13** d'actionnement monté en rotation sur la console, et, en troisième lieu, un système **14** de transmission interposé entre le système **13** d'actionnement et les biellettes **8** pour transformer le mouvement de rotation du système **13** d'actionnement en mouvement de translation radial de l'axe C d'articulation du compas **8**.

Le système **13** d'actionnement comprend un levier **15** dont une extrémité **16** est fixée à la console en étant montée en rotation par rapport à celle-ci autour d'un axe **D** d'articulation. À son extrémité **17** opposée, le levier **15** est muni d'un suiveur **18** de came qui coopère avec une came **19** fixe par rapport au bâti du carrousel **1** et comprenant un chemin **20** de came continu en boucle fermée, situé au voisinage de la périphérie de celui-ci.

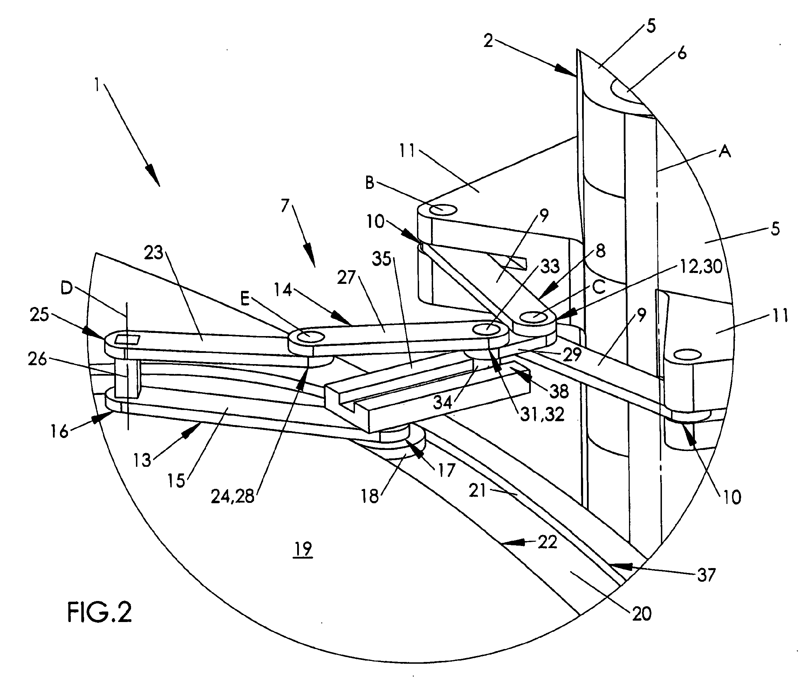

Comme cela est illustré sur les figures 1 à 4, le chemin **20** de came se présente sous forme d'une rainure à section rectangulaire, et le suiveur **18** de came se présente sous forme d'un galet monté en rotation libre à l'extrémité **17** du levier **15** et circulant dans la rainure **20,** en appui contre l'un des flancs de celle-ci. À l'ouverture du moule **2,** le galet **18** est en appui contre un flanc **21** externe de la rainure ; a contrario, à la fermeture du moule **2,** le galet **18** est en appui contre un flanc interne **22** de la rainure **20.**

Le système **13** d'actionnement comprend par ailleurs une manivelle **23** qui, à une extrémité **24** avant, est couplée à l'extrémité **12** arrière des biellettes **9** par l'intermédiaire du système **14** de transmission. Par une extrémité **25** arrière, la manivelle **23** est rigidement solidaire du levier **15** par l'intermédiaire d'une tige **26** à section carrée coaxiale de l'axe **D** d'articulation du levier **15,** de sorte que l'angle entre le levier **15** et la manivelle **23** est constant, celle-ci accompagnant le levier **15** dans son mouvement de rotation autour de l'axe **D,** imprimé par l'action de la came **19** sur le galet **18.**

Comme cela est visible sur les figures, le système **14** de transmission comprend une bielle **27** dont une extrémité **28** arrière est couplée en rotation à la manivelle **23** à l'extrémité **24** avant de celle-ci, autour d'un axe **E** d'articulation, ainsi qu'une entretoise **29** interposée entre la bielle **27** et le compas **8** et dont une extrémité **30** avant est couplée en rotation à l'extrémité **12** arrière des biellettes **9,** et une extrémité **31** arrière couplée en rotation à une extrémité **32** avant de la bielle **27.**

La bielle **27** et l'entretoise **29** sont réunies par un axe **33** dont une partie inférieure s'étend en saillie et forme un pion **34** qui coopère de manière coulissante avec une glissière **35** solidaire de la console et orientée radialement, suivant un axe **X** principal joignant, dans un plan perpendiculaire aux axes **A, B, C, D, E, 33** (tous parallèles), l'axe **A** d'articulation du moule **2** et l'axe **C** commun de rotation des biellettes (cet axe X principal coupe également l'axe central du carrousel 1).

De la sorte, l'axe **33** de liaison entre la bielle **27** et l'entretoise **29** est astreint, au cours du mouvement d'ouverture ou de fermeture du moule **2,** à se déplacer linéairement suivant l'axe **X** principal. Puisque l'ensemble biellettes **9**-coquilles **3** forme un parallélogramme déformable, et que l'axe **A** d'articulation du moule **2** est sécant avec l'axe **X** principal, l'axe **C** commun de rotation des biellettes **9** est à son tour astreint à se déplacer linéairement suivant l'axe **X** principal, qui à chaque instant est donc confondu avec la bissectrice de l'angle défini entre les biellettes **9**. Il en résulte une ouverture (et une fermeture) symétrique du moule **2,** de part et d'autre du plan **36** de joint contenant les axes **A** et **X**. Le moule **2** ne subit par conséquent aucune rotation propre autour de son axe **A** d'articulation, au bénéfice de l'équilibre des masses de la machine **1.**

L'ouverture et la fermeture du moule **2** se produisent comme suit.

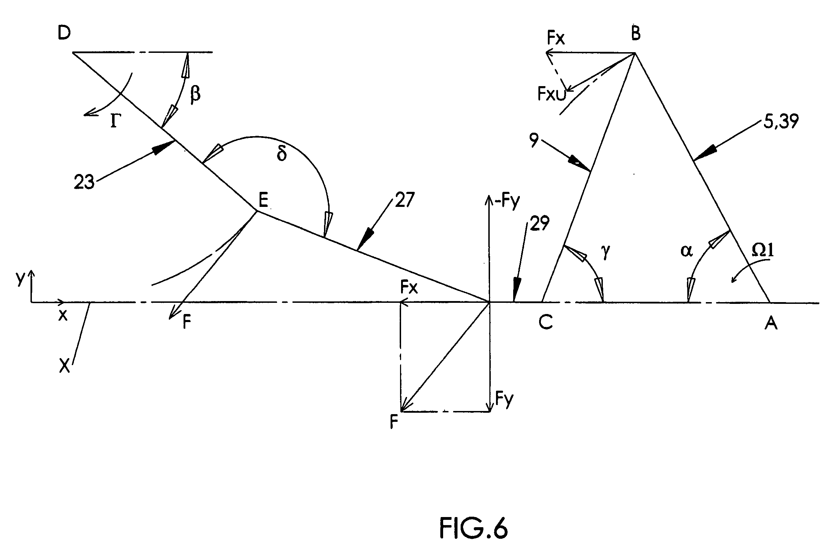

En position fermée du moule **2,** les demi-moules **3** sont appliqués l'un contre l'autre de part et d'autre du plan **36** de joint. Cette position fermée du moule **2** est illustrée sur les figures 1, 2, 3, ainsi que sur la figure 6, où l'on a représenté de manière schématique la cinématique du système **7** d'ouverture et fermeture à l'instant initial de l'ouverture du moule **2,** alors que celui-ci est encore en position fermée. On a, pour des raisons de simplicité, schématisé une unique biellette **9** et sa coquille **5** correspondante.

En position fermée du moule **2**:

- le galet **18** est situé dans une section **37** à rayon de courbure constant du chemin **20** de came, en appui contre le flanc **22** interne ;
- le pion **34** se trouve à une extrémité **38** avant de la glissière **35 ;**
- le segment **39** joignant, dans le plan perpendiculaire à l'axe **A** d'articulation du moule **2** et contenant l'axe **X** principal, l'axe **A** du moule **2** et l'axe **B** d'ancrage de la biellette **9** (voir figure 6), forme avec l'axe **X** principal un angle $\alpha$ ;
- la manivelle **23** forme avec l'axe **X** principal un angle $\beta$ ;
- chaque biellette **9** forme avec l'axe **X** principal un angle $\gamma$ ;
- la bielle **27** forme avec la manivelle **23** un angle $\delta$.

Une préforme introduite dans le moule **2** préalablement à sa fermeture est soufflée au cours de la rotation du moule **2** accompagnant le carrousel **1** sur une première fraction angulaire de sa rotation, le moule **2** étant maintenu fermé et le mécanisme **7** d'ouverture et fermeture conservant sa configuration initiale.

À la fin du soufflage, le récipient est formé et peut être évacué du moule **2.** Le moule **2** aborde une deuxième fraction angulaire de la rotation du carrousel **1,** le long de laquelle le galet **18** circule dans une section **40** du chemin **20** de came à rayon de courbure variable. Le galet **18,** en appui contre le flanc **21** externe de la rainure **20,** est alors soumis à un effort exercé vers l'arrière par la came **19.**

L'effort exercé par la came **19** sur le galet **18** induit sur le système **13** d'actionnement un couple r moteur provoquant la rotation solidaire du levier **15** et de la manivelle **23** autour de l'axe **D.** La manivelle **23** exerce par conséquent sur la bielle **27** un effort F de traction, appliqué à l'extrémité **28** arrière de celle-ci, orienté vers l'arrière et perpendiculaire à la direction générale suivant laquelle s'étend la manivelle **23.**

Cet effort **F** de traction est transmis par la bielle **27** à l'entretoise **29.** On a représenté sur la figure 6 la composante $F_x$ axiale et la composante $F_y$ transversale de cet effort **F.** L'extrémité **31** arrière de l'entretoise **29** étant astreinte à se déplacer axialement en raison du coulissement du pion **34** dans la glissière **35,** seule la composante $F_x$ axiale de l'effort **F** est transmise par l'entretoise **29** à la biellette **9,** la composante $F_y$ transversale étant compensée par une réaction $-F_y$ inverse de la glissière **35** sur le pion **34.**

La biellette **9** transmet la composante $F_x$ axiale de l'effort **F** à la coquille **5** respective, appliquée sur l'axe **B** d'ancrage de la biellette **9.**

La coquille **5** étant elle-même astreinte à une rotation simple autour de l'axe **A** d'articulation du moule **2,** seule la composante $F_{xu}$ de l'effort $F_x$ tangente à la trajectoire circulaire (représentée en trait mixte) de l'axe **B** d'ancrage est utile à la rotation de la coquille **5,** la composante $F_{xv}$ radiale de l'effort $F_x$ étant compensée par une réaction $-F_{xv}$ inverse de la coquille **5.**

On peut ainsi exprimer le couple $\Omega_1$ qui s'exerce sur la coquille **5,** induit par le couple r moteur via le système **7** d'ouverture et fermeture :

$$(1) \qquad \Omega_1 = \frac{AB}{DE} \cdot \Gamma \cdot \sin\alpha \cdot \sin\beta$$

Où :

- AB est la distance entre les axes A et B ;
- DE est la distance entre les axes D et E.

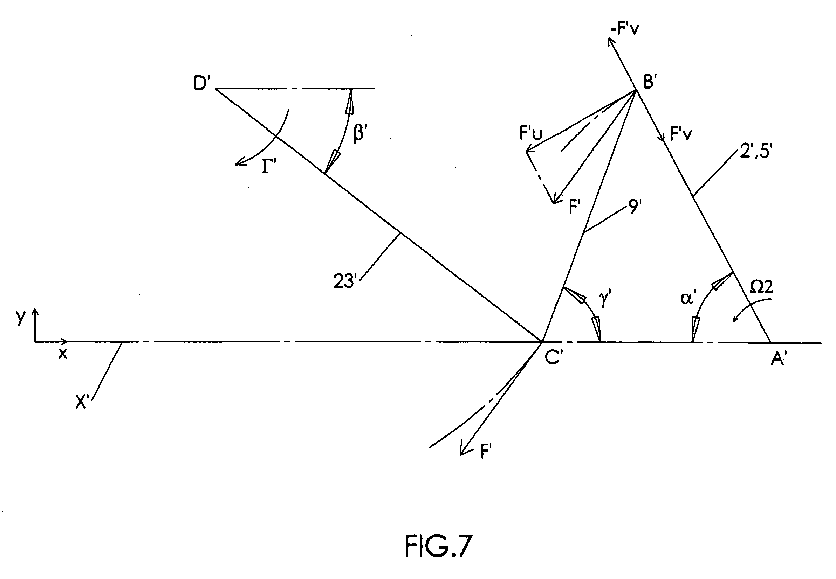

À titre d'exemple comparatif, on a schématisé sur la figure 7 un système de type connu pour l'ouverture et la fermeture d'un moule **2'.** Ce système, représenté à l'instant de l'ouverture du moule, comprend un levier muni d'un galet, solidaire d'une manivelle **23'** couplée en rotation aux extrémités arrière des biellettes **9'.** Pour des raisons de clarté, on a ici repris les références employées précédemment, agrémentées du signé « ». Ainsi :

- **A'** désigne l'axe d'articulation du moule ;
- **X'** désigne l'axe principal reliant l'axe central de la machine et l'axe **A'** d'articulation du moule ;
- **B'** désigne l'axe d'ancrage des biellettes (supposées de longueur identique) sur chaque coquille **5'** ;
- **C'** désigne l'axe d'articulation des biellettes **9'** ;
- **D'** désigne l'axe d'articulation commun du levier et de la manivelle **23'** ;
- r' désigne le couple moteur généré sur le levier par l'action de la came, tendant à l'ouverture du moule depuis sa position fermée ;
- α' désigne l'angle entre la droite joignant, dans un plan de coupe horizontal, les axes **A'** et **B',** et l'axe **X'** principal ;
- β' désigne l'angle entre la manivelle **23'** et l'axe **X'** principal ;
- γ' désigne l'angle entre la biellette **9'** et l'axe **X'** principal.

Nous avons vu dans le mode de réalisation décrit précédemment que le guidage linéaire de l'extrémité **32** avant de la bielle **27,** le long de l'axe **X** principal, induit une ouverture symétrique de celui-ci.

Dans la conception antérieure illustrée sur la figure 7, le point C' correspondant au point d'ancrage de la manivelle **23'** aux extrémités arrière des biellettes **9'** est astreint à se déplacer suivant un arc de cercle, l'ouverture du moule **2'** étant par conséquent asymétrique et le moule **2'** subissant un léger mouvement de rotation propre autour de son axe **A'** d'articulation.

L'effort exercé par la came sur le galet induit sur le levier le couple r' moteur qui provoque la rotation solidaire du levier et de la manivelle **23'** autour de l'axe **D'.** La manivelle exerce par conséquent sur les biellettes **9'** un effort **F'** de traction, appliqué à l'extrémité arrière de celle-ci, orienté vers l'arrière et perpendiculaire à la direction générale suivant laquelle s'étend la manivelle **23'**.

Le point **C'** n'étant pas guidé linéairement, cet effort **F'** de traction est intégralement transmis par chaque biellette **9'** à la coquille **5'** correspondante, l'effort transmis étant appliqué sur l'axe **B'** d'ancrage de la biellette **9'** sur la coquille **5'**.

La coquille **5'** étant astreinte à une rotation simple autour de son articulation **A'**, seule la composante $F'_u$ de l'effort tangente à la trajectoire circulaire de l'axe **B'** d'ancrage est utile à la rotation de la coquille **5'**, la composante $F'_v$ radiale de l'effort **F'** étant compensée par une réaction $-F'_v$ inverse de la coquille **5'**.

On peut alors exprimer le couple $\Omega_2$ qui s'exerce sur la coquille **5'**, induit par le couple r' moteur via la manivelle **23'** et la biellette **9'** :

$$(2) \qquad \Omega_2 = \frac{A'B'}{C'D'} \cdot \Gamma' \cdot \cos(\alpha' - \beta')$$

Soit :

$$(3) \qquad \Omega_2 = \frac{A'B'}{C'D'} \cdot \Gamma' \cdot (\cos\alpha' \cdot \cos\beta' + \sin\alpha' \sin\beta')$$

On peut ainsi comparer les performances statiques, à l'ouverture du moule 2, du mécanisme 7 d'ouverture fermeture décrit plus haut, avec celles du mécanisme connu, en supposant que l'on génère un même couple d'ouverture du moule **2, 2'**, soit $\Omega_1 = \Omega_2$. On a donc, en vertu des équations (1) et (3) :

$$(4) \qquad \frac{AB}{DE} \cdot \Gamma \cdot \sin\alpha \cdot \sin\beta = \frac{A'B'}{C'D'} \cdot \Gamma' \cdot (\cos\alpha' \cdot \cos\beta' + \sin\alpha' \sin\beta')$$

Soit :

$$(5) \qquad \Gamma = \frac{DE}{AB} \cdot \frac{A'B'}{C'D'} \cdot \Gamma' \cdot \frac{\cos\alpha' \cdot \cos\beta' + \sin\alpha' \sin\beta'}{\sin\alpha \cdot \sin\beta}$$

Aussi, en supposant inchangée la conception du moule 2 lui-même, c'est-à-dire en supposant sensiblement identiques les longueurs **AB** et **A'B'**, en supposant par ailleurs sensiblement identiques les longueurs **CD** et **C'D'** et en supposant en outre égaux les angles $\alpha$ et $\alpha$', on peut en déduire que :

$$(6) \qquad \Gamma = \frac{DE}{CD} \cdot \Gamma' \cdot \left( \frac{1}{\tan\alpha} \cdot \frac{\cos\beta'}{\sin\beta} + \frac{\sin\beta'}{\sin\beta} \right)$$

Ainsi, en greffant le système 7 d'ouverture et fermeture décrit ci-dessus sur un moule classique, pour lequel les angles $\alpha$' et $\beta$' sont généralement d'environ 70° et 75°, respectivement, et en choisissant un rapport dimensionnel $\frac{DE}{CD}$ inférieur ou égal à 0,6 et un angle $\beta$ supérieur ou égal à 40°, l'inégalité suivante est toujours vérifiée :

$$(7) \qquad \Gamma \leq \Gamma'$$

En d'autres termes, le système **7** d'ouverture et fermeture décrit ci-dessus permet de diminuer le couple moteur qu'il est nécessaire d'appliquer au levier **15** pour générer le même couple d'ouverture du moule **2,** appliqué sur la charnière **A** de celui-ci.

Par ailleurs, en diminuant la longueur **DE** de la manivelle **23** tout en maintenant constants la distance **CD** et l'angle β, ou en augmentant l'angle β à longueur **DE** constante, on diminue en proportion le couple r moteur permettant d'induire le même couple $\Omega_1$ d'ouverture du moule 2.

Ainsi, pour une longueur **DE** égale à la moitié de la distance **CD,** et pour un angle β de 45°, le couple moteur r nécessaire pour induire un même couple $\Omega_1$ d'ouverture du moule **2** est inférieur de 25% environ au couple moteur r' nécessaire pour induire le même couple d'ouverture du moule **2'** dans un système classique, toutes choses égales par ailleurs (en particulier avec **C'D'=CD** et β'=β).

Le couple r moteur étant égal au produit de l'effort exercé par la came **19** sur le galet **18** par la longueur du levier **15,** il résulte de ce qui précède qu'il est possible, en conservant une même came **19,** de diminuer la longueur du levier **15.**

De même, l'interposition de la bielle **27** et de l'entretoise **29** permet, sans nécessairement éloigner du moule **2** l'axe **D** de rotation du levier **15,** de rapprocher du moule **2** l'axe **C** commun d'articulation des biellettes **9,** et donc d'augmenter leur inclinaison γ par rapport à l'axe **X principal,** tout en diminuant leur longueur.

De la sorte, d'un point de vue dynamique, on réduit la masse - et donc l'inertie - des pièces mobiles en rotation au cours des phases d'ouverture et de fermeture du moule **2.** Il est donc possible d'augmenter les vitesses d'actionnement, ce qui permet d'accroître les cadences de production.

On notera qu'il est envisageable d'ancrer la bielle **27** directement sur les biellettes **9** (c'est-à-dire de supprimer l'entretoise **29),** le pion **34** étant conservé mais prévu alors à une extrémité inférieure de l'axe C commun d'articulation des biellettes 9 et de la bielle **27.** La présence de l'entretoise **29** est toutefois préférable car, astreinte à un mouvement linéaire par rapport à la console, elle présente l'avantage de n'avoir pas d'inertie de rotation propre tout en permettant de réduire la longueur (et donc la masse et l'inertie de rotation) de la bielle **27.**

Des essais effectués dans les conditions normales de production avec les choix dimensionnels préconisés ci-dessus permettent d'augmenter les cadences de production d'au moins 10%.

Nous avons étudié ci-dessus les effets et avantages induits par le système 7 d'ouverture et fermeture lors de l'ouverture du moule **2.** Mais ce système 7 présente des meilleures performances également à la fermeture du moule **2,** en comparaison avec les systèmes connus.

En effet, la combinaison de l'interposition de la bielle **27** et du guidage linéaire de l'axe **C** d'articulation des biellettes **9** a pour effet de ne transmettre aux biellettes **9** que la composante axiale des efforts exercés par la manivelle **23,** la composante radiale étant compensée par une réaction inverse de la glissière **35** sur le pion **34** de guidage.

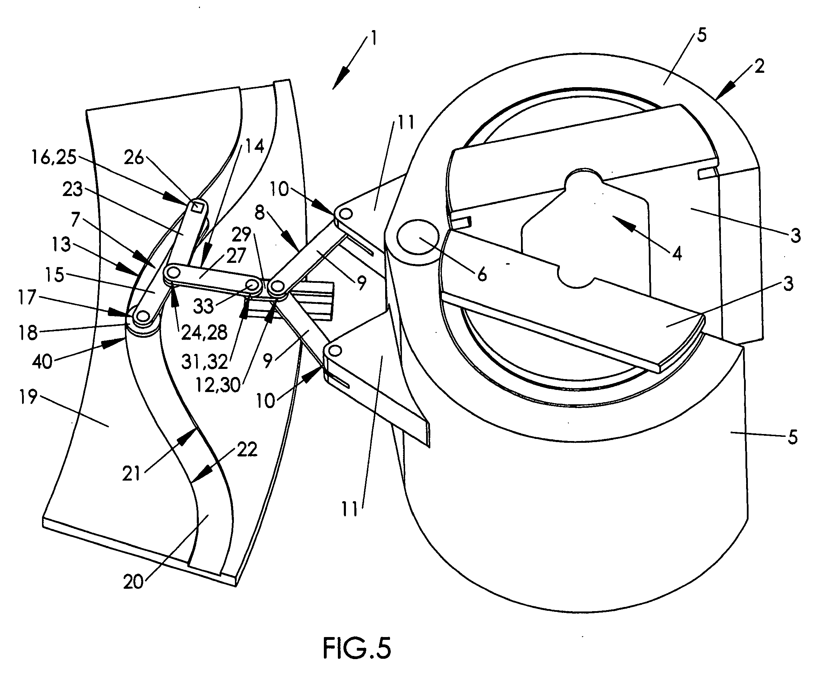

Lors de la fermeture du moule **2,** à partir de **sa** position ouverte illustrée sur les figures 4 et 5, la came **19** exerce sur le galet **18** un effort sensiblement radial dirigé vers l'avant. Cet effort est transmis, via le levier **15** et la manivelle **23,** à la bielle **27** qui, à son tour, transmet aux biellettes **9** (via l'entretoise **29)** la composante axiale, dirigée vers l'avant, de l'effort exercé sur elle par la manivelle **23.**

Tant que le moule **2** est ouvert, les efforts résistants des biellettes **9,** qui résultent des couples induits par les forces de frottement qui s'exercent au niveau des axes **B** d'ancrage des biellettes **9** et de l'axe **A** d'articulation du moule **2,** sont négligeables (à supposer que les axes **A, B** soient convenablement lubrifiés).

En revanche, dès lors que le moule **2** est fermé, les demi-moules **3** étant appliqués l'un contre l'autre de part et d'autre du plan **36** de joint, les biellettes **9** sont bloquées en rotation. Malgré ce blocage, il est temporairement nécessaire, pendant une fraction de seconde après la fermeture du moule, de maintenir l'application d'un effort sur les biellettes **9** afin d'éviter tout phénomène de rebond des demi-moules **3** tant que leur verrouillage mutuel (par exemple au moyen d'un système de verrouillage connu, cf. le brevet français FR 2 863 930 ou son équivalent américain US 7 384 261 au nom de SIDEL) n'est pas achevé.

Les biellettes **9** étant bloquées en rotation, l'exercice, à leur extrémité **12** arrière, d'un effort axial induit sur chacune d'elle la combinaison d'un moment de flexion autour de leur axe **B** d'ancrage sur la coquille **5** respective, et d'un effort de compression appliqué à leur extrémité **12** arrière, dirigé vers leur axe **B** d'ancrage auquel la coquille **5** applique une réaction inverse. Si le moment de flexion est indépendant de l'angle γ de la biellette **9** par rapport à l'axe **X** principal, l'effort de compression, en revanche, est d'autant plus faible que cet angle γ est élevé.

L'augmentation de l'angle γ permet par conséquent de réduire les efforts de compression auxquelles sont soumises les biellettes **9** à la fermeture du moule. Il en résulte, pour les biellettes **9,** des risques de flambage moindres, et une tenue à la fatigue accrue au cours des milliers de cycles répétés d'ouverture et de fermeture du moule **2.**

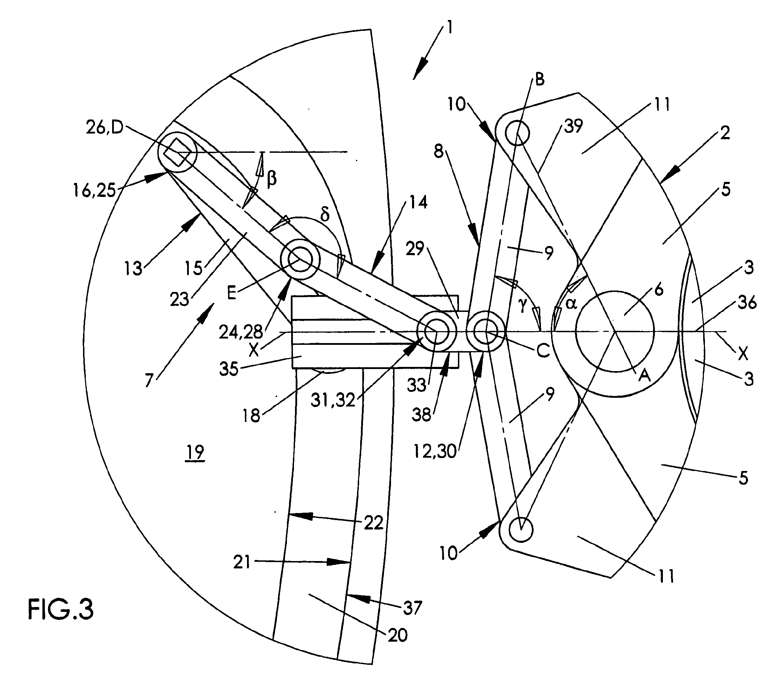

Des essais ont démontré que, pour un angle γ supérieur ou égal à 60° environ, et par exemple, comme illustré sur les figures 1 et 3, de 70° environ (c'est-à-dire pour un angle **2**γ entre les biellettes supérieur à 120° environ, et par exemple de 140° environ), les efforts de compression auxquels sont soumises les biellettes **9,** dans des conditions normales de fonctionnement, sont suffisamment faibles pour garantir une tenue sans faille des biellettes **9** tout au long de la vie de la machine **1.**

**Revendications**

1. Mécanisme **(7)** de commande d'ouverture et de fermeture d'un moule **(2)** portefeuille comprenant deux demi-moules **(5)** montés articulés l'un par rapport à l'autre autour d'une charnière **(A)** commune entre une position fermée où les demi-moules **(5)** sont appliqués l'un contre l'autre et une position ouverte dans laquelle les demi-moules **(5)** sont écartés angulairement l'un de l'autre, ce mécanisme comprenant :

   - une paire de biellettes **(9)** de même longueur articulées l'une par rapport à l'autre à une extrémité **(12)** arrière autour d'un axe **(C)** commun et couplées chacune en rotation, à une extrémité **(10)** avant, à un demi-moule **(5)** respectif, autour d'un axe **(B)** d'ancrage respectif,
   - un système **(13)** d'actionnement comprenant une manivelle **(23)** articulée autour d'un axe **(D)** de rotation fixe par rapport à la charnière **(A)** du moule et couplée aux biellettes **(9)** à leur extrémité **(12)** arrière ;

   ce mécanisme **(7)** étant **caractérisé :**

   - **en ce qu'**il comprend un système **(14)** de transmission interposé entre le système **(13)** d'actionnement et les biellettes **(9)**, ce système **(14)** de transmission incluant une bielle **(27)** dont une extrémité **(28)** arrière est couplée en rotation à la manivelle **(23)**, et dont une extrémité **(32)** avant opposée est couplée en rotation aux biellettes **(9)**.
   - et **en ce que** l'axe **(C)** de rotation commun des biellettes **(9)** est guidé linéairement suivant un axe **(X)** principal joignant, dans un plan perpendiculaire à l'axe **(A)** d'articulation du moule **(2)**, l'axe **(A)** du moule **(2)** et l'axe **(C)** commun de rotation des biellettes **(9)**.

2. Mécanisme **(7)** selon la revendication 1, dans lequel le système **(14)** de transmission comprend une entretoise **(29)** dont une extrémité **(31)** arrière est couplée en rotation à la bielle **(27)**, et une extrémité **(30)** avant opposée couplée en rotation aux biellettes **(9)**.

3. Mécanisme **(7)** selon la revendication 2, dans lequel le guidage linéaire de l'axe **(C)** de rotation commun des biellettes **(9)** est réalisé au moyen d'un pion **(34)** monté coulissant dans une glissière **(35)** fixe par rapport à l'axe **(A)** d'articulation du moule **(2)**.

4. Mécanisme **(7)** selon les revendications 2 et 3 combinées, dans lequel le pion **(34)** de guidage est formé à une extrémité d'un axe **(33)** de rotation de la bielle **(27)** par rapport à l'entretoise **(29)**.

5. Mécanisme **(7)** selon l'une des revendications 1 à 4, dans lequel la longueur de la manivelle **(23)** est inférieure ou égale à 60% de la distance entre l'axe **(D)** de rotation de la manivelle **(23)** et l'extrémité **(32)** avant de la bielle **(27)** en position fermée du moule **(2)**.

6. Mécanisme **(7)** selon la revendication 5, dans lequel la longueur de la manivelle **(23)** est égale à la moitié environ de la distance entre l'axe **(D)** de rotation de la manivelle **(23)** et l'extrémité **(32)** avant de la bielle **(27)** en position fermée du moule **(2)**.

7. Mécanisme **(7)** selon l'une des revendications 1 à 6, dans lequel, en position fermée du moule, l'angle entre la manivelle et l'axe principal est supérieur ou égal à 40°.

8. Mécanisme **(7)** selon l'une des revendications 1 à 7, dans lequel, en position fermée du moule **(2)**, l'angle (p) entre la manivelle **(23)** et l'axe **(X)** principal est égal à 45° environ.

9. Mécanisme **(7)** selon l'une des revendications 1 à 8, dans lequel, en position fermée du moule **(2)**, l'angle entre les biellettes **(9)** est supérieur ou égal à 120°.

10. Machine **(1)** de fabrication de récipients par moulage, qui comprend un carrousel sur lequel sont montés une pluralité de moules **(2)** portefeuille, **caractérisée en ce qu'**elle comprend, pour chaque moule **(2)**, un mécanisme **(7)** de commande d'ouverture et de fermeture selon l'une des revendications 1 à 9.

**Claims**

1. Mechanism (7) for controlling the opening and closing of a pivoting mould (2) comprising two half-moulds (5) mounted articulated relative to one another around a common hinge (A) between a closed position in which the half-moulds (5) are applied against one another and an open position in which the half-moulds (5) are angularly separated from one another, this mechanism comprising:

- a pair of rocker bars (9) of the same length articulated relative to one another at a rear end (12) around a common axis (C) and each coupled in rotation, at a front end (10), to a respective half-mould (5), around a respective anchoring axis (B),
- an actuation system (13) comprising a crank (23) articulated around a rotation axis (D) that is fixed relative to the hinge (A) of the mould and coupled to the rocker bars (9) at their rear end (12);

this mechanism (7) being **characterized:**

- **in that** it comprises a transmission system (14) interposed between the actuation system (13) and the rocker bars (9), this transmission system (14) including a connecting rod (27), a rear end (28) of which is coupled in rotation to the crank (23), and an opposite front end (32) of which is coupled in rotation to the rocker bars (9),
- and **in that** the common rotation axis (C) of the rocker bars (9) is guided linearly along a main axis (X) joining, in a plane at right angles to the articulation axis (A) of the mould (2), the axis (A) of the mould (2) and the common rotation axis (C) of the rocker bars (9).

2. Mechanism (7) according to Claim 1, in which the transmission system (14) comprises a spacer (29) of which a rear end (31) is coupled in rotation to the connecting rod (27), and an opposite front end (30) coupled in rotation to the rocker bars (9).

3. Mechanism (7) according to Claim 2, in which the linear guidance of the common rotation axis (C) of the rocker bars (9) is produced by means of a pin (34) mounted to slide in a slideway (35) that is fixed relative to the articulation axis (A) of the mould (2).

4. Mechanism (7) according to Claims 2 and 3 combined, in which the guiding pin (34) is formed at one end of a rotation axis (33) of the connecting rod (27) relative to the spacer (29).

5. Mechanism (7) according to one of Claims 1 to 4, in which the length of the crank (23) is less than or equal to 60% of the distance between the rotation axis (D) of the crank (23) and the front end (32) of the connecting rod (27) in the closed position of the mould (2).

6. Mechanism (7) according to Claim 5, in which the length of the crank (23) is equal to approximately half of the distance between the rotation axis (D) of the crank (23) and the front end (32) of the connecting rod (27) in the closed position of the mould (2).

7. Mechanism (7) according to one of Claims 1 to 6, in which, in the closed position of the mould, the angle between the crank and the main axis is greater than or equal to 40°.

8. Mechanism (7) according to one of Claims 1 to 7, in which, in the closed position of the mould (2), the angle ($\beta$) between the crank (23) and the main axis (X) is equal to approximately 45°.

9. Mechanism (7) according to one of Claims 1 to 8, in which, in the closed position of the mould (2), the angle between the rocker bars (9) is greater than or equal to 120°.

10. Machine (1) for manufacturing containers by moulding, which comprises a carousel on which are mounted a plurality of pivoting moulds (2), **characterized in that** it comprises, for each mould (2), a mechanism (7) for controlling the opening and closing according to one of Claims 1 to 9.


**Patentansprüche**

1. Mechanismus (7) zur Steuerung des Öffnens und Verschließens einer Form (2) vom zusammenklappbaren Typ, umfassend zwei Halbformen (5), die gelenkig zueinander um ein gemeinsames Scharnier (A) zwischen einer verschlossenen Position, in der die Halbformen (5) aneinander angelegt sind, und einer offenen Position montiert sind, in der die Halbformen (5) im Winkel voneinander entfernt sind, wobei dieser Mechanismus Folgendes umfasst:

- ein Paar von Schwingarmen (9) derselben Länge, die zueinander an einem hinteren Ende (12) um eine gemeinsame Achse (C) angelenkt und jeweils in Drehung an einem vorderen Ende (10) an eine jeweilige Halbform (5) um eine jeweilige Befestigungsachse (B) gekoppelt sind,
- ein Betätigungssystem (13), umfassend eine Kurbel (23), die um eine feste Rotationsachse (D) in Bezug zum Scharnier (A) der Form angelenkt und an die Schwingarme (9) an ihrem hinteren Ende (12) gekoppelt ist;

wobei dieser Mechanismus (7) **dadurch gekennzeichnet ist:**

- **dass** er ein Übertragungssystem (14) umfasst, das zwischen dem Betätigungssystem (13) und den Schwingarmen (9) angeordnet ist, wobei dieses Übertragungssystem (14) eine Stange (27) umfasst, deren hinteres Ende (28) in Drehung mit der Kurbel (23) gekoppelt ist und deren gegenüberliegendes vorderes Ende (32) in Drehung mit den Schwingarmen (9) gekoppelt ist,
- und **dass** die gemeinsame Rotationsachse (C) der Schwingarme (9) linear entlang einer Hauptachse (X) geführt wird, die in einer Ebene senkrecht auf die Gelenkachse (A) der Form (2) an die Achse (A) der Form (2) und die gemeinsame Rotationsachse (C) der Schwingarme (9) anschließt.

2. Mechanismus (7) nach Anspruch 1, bei dem das Übertragungssystem (14) eine Querstrebe (29) umfasst, deren hinteres Ende (31) in Drehung mit der Stange (27) gekoppelt ist und deren gegenüberliegendes vorderes Ende (30) in Drehung mit den Schwingarmen (9) gekoppelt ist.

3. Mechanismus (7) nach Anspruch 2, bei dem die lineare Führung der gemeinsamen Rotationsachse (C) der Schwingarme (9) mit Hilfe eines Metallstücks (34) verwirklicht ist, das gleitend in einer zur Gelenkachse (A) der Form (2) festen Gleitschiene (35) montiert ist.

4. Mechanismus (7) nach den Ansprüchen 2 und 3 in Kombination, bei dem das Führungsstück (34) an einem Ende einer Rotationsachse (33) der Stange (27) in Bezug zur Querstrebe (29) ausgebildet ist.

5. Mechanismus (7) nach einem der Ansprüche 1 bis 4, bei dem die Länge der Kurbel (23) kleiner oder gleich 60 % des Abstandes zwischen der Rotationsachse (D) der Kurbel (23) und dem vorderen Ende (32) der Stange (27) in der geschlossenen Position der Form (2) ist.

6. Mechanismus (7) nach Anspruch 5, bei dem die Länge der Kurbel (23) gleich ungefähr der Hälfte des Abstandes zwischen der Rotationsachse (D) der Kurbel (23) und dem vorderen Ende (32) der Stange (27) in der geschlossenen Position der Form (2) ist.

7. Mechanismus (7) nach einem der Ansprüche 1 bis 6, bei dem in der geschlossenen Position der Form der Winkel zwischen der Kurbel und der Hauptachse größer oder gleich 40° ist.

8. Mechanismus (7) nach einem der Ansprüche 1 bis 7, bei dem in der geschlossenen Position der Form (2) der Winkel (β) zwischen der Kurbel (23) und der Hauptachse (X) gleich ungefähr 45° ist.

9. Mechanismus (7) nach einem der Ansprüche 1 bis 8, bei dem in der geschlossenen Position der Form (2) der Winkel zwischen den Schwingarmen (9) größer oder gleich 120° ist.

10. Maschine (1) zur Herstellung von Behältern durch Formguß, umfassend ein Karussell, auf dem eine Vielzahl von zusammenklappbaren Formen (2) montiert ist, **dadurch gekennzeichnet, dass** sie für jede Form (2) einen Mechanismus (7) zur Steuerung des Öffnens und Verschließens nach einem der Ansprüche 1 bis 9 umfasst.

FIG.1

FIG.2

FIG.3

EP 2 435 235 B1

FIG.4

FIG.5

EP 2 435 235 B1

FIG.6

FIG.7

EP 2 435 235 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2843714, SIDEL
- US 7249944 B
- FR 2863930
- US 7384261 B, SIDEL